# EUROPÄISCHE PATENTSCHRIFT

(11) **EP 2 794 158 B1**
(45) Veröffentlichungstag und Bekanntmachung des Hinweises auf die Patenterteilung: **22.02.2023**
(21) Anmeldenummer: 12812270.2
(22) Anmeldetag: 21.12.2012
(51) Int. Cl.: B23B 51/04, B28D 1/04

(54) **BOHRKRONE MIT EINEM AUSTAUSCHBAREN SCHNEIDABSCHNITT**
CORE DRILL WITH AN EXCHANGEABLE CORE DRILL SECTION
FORET TUBULAIRE AVEC UNE SECTION ÉCHANGEABLE DE FORET TUBULAIRE

(30) Priorität: 22.12.2011 DE 102011089546
(43) Veröffentlichungstag der Anmeldung: 29.10.2014
(73) Patentinhaber: HILTI Aktiengesellschaft, 9494 Schaan (LI)
(72) Erfinder: HOOP, Matthaeus, 9492 Eschen (LI); WEBER, Christoph, 6345 Neuheim (CH); EBERT, Joerg, 6800 Feldkirch (AT)
(74) Vertreter: Hilti Aktiengesellschaft Corporate Intellectual Property
(86) Internationale Anmeldenummer: PCT/EP2012/076774
(87) Internationale Veröffentlichungsnummer: WO 2013/093060

(56) Entgegenhaltungen:
- EP-A2- 0 314 123
- DE-A1- 2 130 728
- FR-A5- 2 097 340
- US-A- 3 374 696
- US-A- 3 878 906
- US-A- 3 888 320
- US-A1- 2007 036 620

## Beschreibung

### Technisches Gebiet

Die vorliegende Erfindung betrifft eine Bohrkrone mit einem austauschbaren Schneidabschnitt gemäß dem Oberbegriff des Anspruchs 1.

### Stand der Technik

Bohrkronen bestehen aus einem Schneidabschnitt mit einem oder mehreren Schneidsegmenten, einem Bohrschaftabschnitt und einem Aufnahmeabschnitt mit Einsteckende. Die Bohrkrone wird über das Einsteckende in einer Werkzeugaufnahme einer Bohrmaschine befestigt und im Bohrbetrieb von der Bohrmaschine um eine Bohrachse gedreht. Bekannte Bohrkronen werden in Bohrkronen mit einem austauschbaren Bohrkronenabschnitt und Bohrkronen ohne austauschbaren Bohrkronenabschnitt unterschieden. Dabei werden unter dem Begriff "Bohrkronenabschnitt" die einzelnen Abschnitte der Bohrkrone, die als Schneidabschnitt, Bohrschaftabschnitt und Aufnahmeabschnitt ausgebildet sein können, zusammengefasst.

Aus EP 0 428 476 A1 sind Bohrkronen bekannt, bei denen der abgenutzte Schneidabschnitt entfernt und durch einen neuen Schneidabschnitt ersetzt wird. Der Bohrschaftabschnitt und der Schneidabschnitt sind über eine kombinierte Steck- und Lötverbindung miteinander verbunden. Als "kombinierte Steck- und Lötverbindung" werden Verbindungen von zwei Verbindungselementen bezeichnet, die zunächst eine in mindestens einer Richtung formschlüssige Steckverbindung bilden; anschließend werden die gesteckten Verbindungselemente miteinander verlötet. Der Schneidabschnitt weist ein als Buchse ausgebildetes erstes, äußeres Verbindungselement und der Bohrschaftabschnitt ein als Stecker ausgebildetes zweites, inneres Verbindungselement auf. Die Verbindungselemente werden ineinander gesteckt und anschließend miteinander verlötet. Das innere Verbindungselement ist um 2 bis 10 % länger als das äußere Verbindungselement ausgebildet und liegt mit einer Stirnfläche an einer Anlagefläche des äußeren Verbindungselementes an. Zwischen den ineinander gesteckten Verbindungselementen besteht ein Spalt, der mit einem Lot gefüllt wird. Durch Erwärmen der Verbindungselemente schmilzt das Lot und es bildet sich eine Lötverbindung zwischen den Verbindungselementen.

US 2010/200304 A1 offenbart eine weitere bekannte Bohrkrone bestehend aus einem austauschbaren Schneidabschnitt, einem Bohrschaftabschnitt und einem Aufnahmeabschnitt, wobei der Schneidabschnitt und der Bohrschaftabschnitt über eine kombinierte Steck- und Lötverbindung miteinander verbunden sind. Der Schneidabschnitt umfasst einen offenen Ringabschnitt und mehrere Schneidsegmente, die fest mit dem Ringabschnitt verbunden sind. Durch den offenen Ringabschnitt mit einem schmalen Spalt können Maßabweichungen des Bohrschaftabschnittes ausgeglichen werden. Der Bohrschaftabschnitt umfasst ein als Stecker ausgebildetes inneres Verbindungselement und der Schneidabschnitt ein als Buchse ausgebildetes äußeres Verbindungselement, die ineinander gesteckt und anschließend miteinander verlötet werden. Der Ringabschnitt weist entlang des Umfangs mehrere durchgehende Bohrungen auf, die zumindest teilweise im äußeren Verbindungselement angeordnet sind. Die Bohrungen unterstützen die Verteilung des Lotes durch Kapillarwirkung in den Zwischenraum zwischen dem inneren und äußeren Verbindungselement.

Die bekannten Bohrkronen mit einem austauschbaren Bohrkronenabschnitt weisen einen ersten Bohrkronenabschnitt mit einem ersten Verbindungselement und einen zweiten Bohrkronenabschnitt mit einem zweiten Verbindungselement auf, wobei das erste und zweite Verbindungselement eine Steckverbindung mit einem äußeren Verbindungselement und einem inneren Verbindungselement bilden. Die Verbindungselemente werden über eine Lötverbindung stoffschlüssig miteinander verbunden. Um einen abgenutzten Schneidabschnitt zu ersetzen, wird bei den bekannten Bohrkronen mit kombinierter Steck- und Lötverbindung die Lötverbindung zwischen dem Bohrschaftabschnitt und dem abgenutzten Schneidabschnitt zerstört, ein neuer Schneidabschnitt wird auf den Bohrschaftabschnitt aufgesteckt und der Bohrschaftabschnitt und der neue Schneidabschnitt werden miteinander verlötet. Die Bohrkronen mit kombinierter Steck- und Lötverbindung weisen den Nachteil auf, dass zum Zerstören der Lötverbindung zwischen dem abgenutzten Schneidabschnitt und dem Bohrschaftabschnitt und zum Erstellen einer neuen Lötverbindung zwischen dem neuen Schneidabschnitt und dem Bohrschaftabschnitt eine Wärmequelle bzw. ein Lötgerät erforderlich sind. Daher eignen sich die bekannten Bohrkronen nicht für einen schnellen Austausch des Schneidabschnittes auf der Baustelle.

Eine Lötverbindung zwischen dem Bohrschaftabschnitt und dem Schneidabschnitt besitzt einen weiteren Nachteil. Die Schneidsegmente werden häufig durch Löten mit dem Ringabschnitt verbunden und die Lötverbindung zu den Schneidsegmenten kann durch das Erwärmen der Verbindungselemente beim Löten des Schneidabschnittes gelöst werden. Um sicherzustellen, dass die Wärmeeinflusszone beim Löten der Verbindungselemente die Schneidsegmente nicht erfasst, muss der Ringabschnitt eine gewisse Höhe aufweisen. Andererseits sollte der Ringabschnitt möglichst schmal sein, um die Kosten für einen Schneidabschnitt zu reduzieren. Der Ringabschnitt wird mit dem Austauschen des Schneidabschnittes weggeworfen und die zusätzlichen Materialkosten für einen höheren Ringabschnitt fallen für jeden Schneidabschnitt an.

FR 2097340 offenbart eine Bohrkrone nach dem Oberbegriff des Anspruchs 1 mit einer lösbaren Steck-Stift-Verbindung zwischen einem Schneidabschnitt und einem Bohrschaftabschnitt. Der Schneidabschnitt umfasst einen zylinderförmigen Ringabschnitt, mehrere Schneidsegmente, die mit dem Ringabschnitt verbunden sind, und ein erstes Steckverbindungselement. Der Bohrschaftabschnitt umfasst ein zweites Steckverbindungselement, das mit dem ersten Steckverbindungselement eine Steckverbindung bildet und mit dem ersten Steckverbindungselement über eine Stiftverbindung verbindbar ist. Die Stiftverbindungen sind als Schraubverbindungen mit einem Schraubelement und einer Aufnahmebohrung ausgebildet, wobei das Schraubelement gegenüber der Außenseite des Bohrschaftabschnittes vorsteht.

### Darstellung der Erfindung

Die Aufgabe der vorliegenden Erfindung besteht demgegenüber darin, eine Bohrkrone mit einem austauschbaren Schneidabschnitt dahingehend weiterzuentwickeln, dass der apparative Aufwand für den Anwender beim Austausch des Schneidabschnittes reduziert ist. Außerdem soll beim Austausch eines Schneidabschnittes das Risiko reduziert werden, dass die Verbindung der Schneidsegmente zum Ringabschnitt durch die Verbindung des Schneidabschnittes zum Bohrschaftabschnitt beeinträchtigt wird.

Diese Aufgabe wird bei der eingangs genannten Bohrkrone erfindungsgemäß durch die Merkmale des unabhängigen Anspruchs 1 gelöst. Vorteilhafte Ausgestaltungen ergeben sich aus den abhängigen Ansprüchen.

Erfindungsgemäß ist vorgesehen, dass die Stiftverbindung als magnetische Stiftverbindung ausgebildet ist, wobei das Stiftelement oder eines der Steckverbindungselemente als Dauermagnet ausgebildet ist.

Der Schneidabschnitt und der Bohrschaftabschnitt der Bohrkrone sind über eine Steckverbindung mit einem ersten und zweiten Steckverbindungselement und über eine Stiftverbindung verbindbar. Die Stiftverbindung weist mindestens eine Aufnahmebohrung und mindestens ein Stiftelement auf, wobei das Stiftelement in die Aufnahmebohrung einsetzbar ist. Durch die Stiftverbindung sind der Schneidabschnitt und der Bohrschaftabschnitt gegen ein Verdrehen und ein Verschieben relativ zueinander gesichert. Eine Stiftverbindung weist den Vorteil auf, dass sie lösbar ausgebildet sein kann, so dass der Anwender mit geringem Aufwand einen Bohrkronenabschnitt austauschen kann.

Als Steckverbindung wird eine Verbindung bezeichnet, bei der zwei Verbindungselemente, die als erstes und zweites Steckverbindungselement bezeichnet werden, entlang einer Steckrichtung geführt werden und in mindestens einer Richtung eine formschlüssige Verbindung bilden. Als Stiftverbindung wird eine Verbindung bezeichnet, bei der zwei Verbindungspartner über ein Stiftelement verbunden werden.

Wenn das Stiftelement als Dauermagnet ausgebildet ist, muss das Steckverbindungselement ferromagnetisch sein und wenn das Steckverbindungselement als Dauermagnet ausgebildet ist, muss das Stiftelement ferromagnetisch sein. Magnetische Stiftverbindungen haben den Vorteil, dass die Stiftelemente wiederverwendbar sind und die Stiftelemente eine bekannte Haltekraft erzeugen. Bei einer magnetischen Stiftverbindung kann der Anwender einen Bohrkronenabschnitt einfach und schnell gegen einen neuen Bohrkronenabschnitt austauschen. Zum Entfernen des alten Bohrkronenabschnittes werden die Stiftelemente aus den Aufnahmebohrungen entfernt und die Steckverbindung zwischen den Bohrkronenabschnitten gelöst. Die Bohrkronenabschnitte werden ineinandergesteckt und die als Dauermagnet ausgebildeten Stiftelemente werden in die Durchgangsbohrungen des äußeren Steckverbindungselementes eingesetzt. Anschließend wird das äußere Steckverbindungselement um das innere Steckverbindungselement gedreht, bis die Stiftelemente in die Aufnahmebohrungen des inneren Steckverbindungselementes einrasten. Das Einrasten der Stiftelemente ist aufgrund der Magnetkräfte für den Anwender zu hören. Die magnetischen Stiftverbindungen haben den Vorteil, dass die Bohrungen im inneren und äußeren Steckverbindungselement beim Austausch eines Bohrkronenabschnittes vom Anwender nicht exakt zueinander ausgerichtet werden müssen, sondern die exakte Ausrichtung erfolgt durch das Drehen des Bohrkronenabschnittes und das Einrasten der Stiftelemente in die Aufnahmebohrungen.

In einer bevorzugten Ausführung bilden das erste und zweite Steckverbindungselement eine Steckverbindung mit einem äußeren Steckverbindungselement und einem inneren Steckverbindungselement. Eine Steckverbindung mit einem inneren und äußeren Steckverbindungselement lässt sich vom Anwender leicht öffnen und schließen. Außerdem sind die Bohrkronenabschnitte, die über die Steckverbindungselemente verbunden werden, genau zueinander ausgerichtet.

Der Außendurchmesser des äußeren Steckverbindungselementes ist kleiner oder gleich dem Außendurchmesser eines Schneidkreises, den die Schneidsegmente bilden und der Innendurchmesser des inneren Steckverbindungselementes ist grösser oder gleich dem Innendurchmesser des Schneidkreises. Der Innen- und Außendurchmesser des Schneidkreises bestimmt den Durchmesser des Bohrloches im Werkstück und den Durchmesser des Bohrkerns. Um die Funktionsfähigkeit der Bohrkrone beim Kernbohren im Werkstück sicherzustellen, darf die kombinierte Steck- und Stiftverbindung der Bohrkrone den Innendurchmesser des Schneidkreises nicht unterschreiten und den Außendurchmesser des Schneidkreises nicht überschreiten.

Bevorzugt ist im ersten Steckverbindungselement und/oder im zweiten Steckverbindungselement der Steckverbindung eine Vertiefung vorgesehen, die mit einem Korrosionsschutzmittel befüllbar ist. Durch das Korrosionsschutzmittel in der Vertiefung wird die Steckverbindung gleitfähig gehalten und die Funktionsfähigkeit verbessert. Das Korrosionsschutzmittel ist besonders wichtig, wenn beim Kernbohren eine Kühl- und Spülflüssigkeit verwendet wird, die zur Korrosion zwischen den Verbindungselementen führen kann und damit die Lösbarkeit der Steckverbindung einschränkt.

Die mindestens eine Aufnahmebohrung ist besonders bevorzugt gleich tief oder tiefer als das mindestens eine Stiftelement ausgebildet. Durch diese Ausbildung der Aufnahmebohrung ist sichergestellt, dass die Stiftelemente gegenüber der Innenseite oder der Außenseite des Bohrschaftabschnittes nicht vorstehen.

In einer ersten Ausführungsform ist das Stiftelement lose ausgebildet und die Aufnahmebohrung durchdringt eines der Steckverbindungselemente vollständig und das andere Steckverbindungselement zumindest teilweise. Ein lose ausgebildetes Stiftelement kann einfach gegen ein neues Stiftelement ausgetauscht werden.

In einer ersten Variante durchdringt die Aufnahmebohrung das andere Steckverbindungselement nicht vollständig. Dadurch, dass die Aufnahmebohrung das Steckverbindungselement nur teilweise und nicht vollständig durchdringt, wird ein Herausfallen des Stiftelementes verhindert. Außerdem kann der Boden der Aufnahmebohrung für eine magnetische Stiftverbindung als Gegenfläche zum Stiftelement dienen.

Besonders bevorzugt weist das andere Steckverbindungselement eine Öffnung auf, die die Aufnahmebohrung mit der Innenseite oder der Außenseite des Bohrkronenabschnittes verbindet, wobei die Öffnung kleiner als die Aufnahmebohrung ausgebildet ist. Über die Öffnung ist das Stiftelement von der Innenseite oder der Außenseite des Bohrkronenabschnittes zugänglich und kann mit einem geeigneten Werkzeug aus der Aufnahmebohrung entfernt werden, so dass die Stiftverbindung vom Anwender leicht gelöst werden kann.

In einer zweiten Variante durchdringt die Aufnahmebohrung das andere Steckverbindungselement vollständig. Durchgängige Aufnahmebohrungen haben den Vorteil, dass die Aufnahmebohrungen von der Innen- oder Außenseite zugänglich sind und die Stiftverbindungen vom Anwender leicht gelöst werden können. Bevorzugt weist die Aufnahmebohrung eine konisch zulaufende Form auf. Durch die konische Form der Aufnahmebohrungen und der Stiftelemente besteht keine Gefahr, dass die Stiftelemente zur Innen- oder Außenseite durchrutschen.

Bevorzugt sind die Stiftelemente in den Aufnahmebohrungen klemmbar. Dabei ist die Aufnahmebohrung als Querschlitz mit unterschiedlichen Breiten ausgebildet und das Stiftelement wird in den Querschlitz eingeführt. Durch eine Drehbewegung um die Bohrachse wird das Stiftelement im Querschlitz gedreht, bis das Stiftelement im Querschlitz geklemmt ist. Dabei kann das Stiftelement auch stufenförmig mit einer ersten und zweiten Stufe ausgebildet sein. Das Stiftelement wird mit der großen Stufe in die Aufnahmebohrung eingeführt und mit der kleinen Stufe in der Aufnahmebohrung geklemmt.

Die magnetischen Stiftelemente lassen sich bevorzugt mit den klemmbaren Stiftelementen kombinieren. Die Kombination eignet sich für Anwendungen der Bohrkrone, bei denen die Magnetkraft beispielsweise durch hohe Temperaturen stark reduziert wird. In diesem Fall fixiert das geklemmte Stiftelement den Schneidabschnitt am Bohrschaftabschnitt. Die magnetische Ausbildung des Stiftelementes hat den Vorteil, dass das Stiftelement beim Einführen des Stiftelementes in die Aufnahmebohrung fixiert ist.

Bevorzugt ist zwischen den Schneidsegmenten und dem Bohrschaftabschnitt ein Führungsabschnitt angeordnet, wobei der Führungsabschnitt zumindest teilweise bündig an der Außenseite und/oder an der Innenseite an die Schneidsegmente anschließt. Durch den bündigen Anschluss des Führungsabschnittes an die Schneidsegmente bildet der Führungsabschnitt beim Bohren mit der Bohrkrone eine Führung für die Schneidsegmente und stabilisiert die Schneidsegmente. Dabei kann die Führung über den Führungsabschnitt an der Außenseite der Bohrkrone über den das Bohrloch umgebenden Untergrund oder an der Innenseite der Bohrkrone über den Bohrkern erfolgen.

Besonders bevorzugt ist der Führungsabschnitt an einem austauschbaren Bohrkronenabschnitt angebracht. In einer ersten Variante schließt der Führungsabschnitt zumindest teilweise bündig an der Außenseite an die Schneidsegmente an und ist zumindest teilweise als äußeres Steckverbindungselement der Steckverbindung ausgebildet. In einer alternativen Variante schließt der Führungsabschnitt zumindest teilweise bündig an der Innenseite an die Schneidsegmente an und ist zumindest teilweise als inneres Steckverbindungselement der Steckverbindung ausgebildet.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Der Einfachheit halber sind nachfolgend für identische oder ähnliche Teile oder Teile mit identischer oder ähnlicher Funktion gleiche Bezugszeichen verwendet.

Es zeigen:

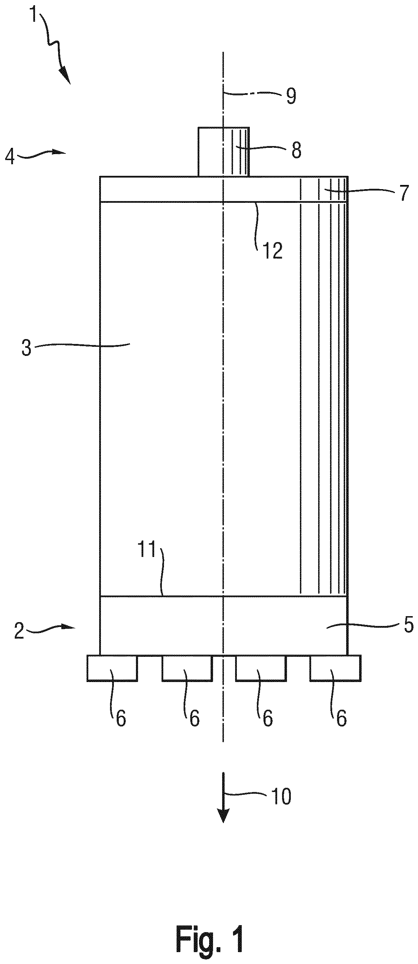

- FIG. 1: eine erste Ausführungsform einer erfindungsgemäßen Bohrkrone bestehend aus einem Schneidabschnitt, einem Bohrschaftabschnitt und einem Aufnahmeabschnitt, wobei der Bohrschaftabschnitt über lösbare Verbindungen mit dem Schneidabschnitt und dem Aufnahmeabschnitt verbunden ist;

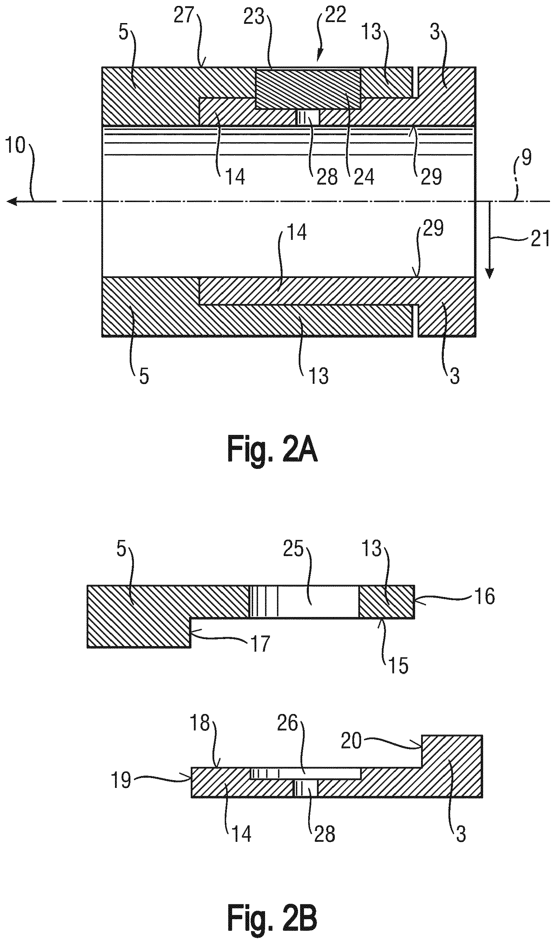

- FIGN. 2A, B: die als Steckverbindung ausgebildete Verbindung zwischen dem Schneidabschnitt und dem Bohrschaftabschnitt der in FIG. 1 gezeigten Bohrkrone in einem Längsschnitt parallel zur Bohrachse im gesteckten Zustand (FIG. 2A) und die Verbindungselemente der Steckverbindung in einer Explosionsdarstellung (FIG. 2B); und

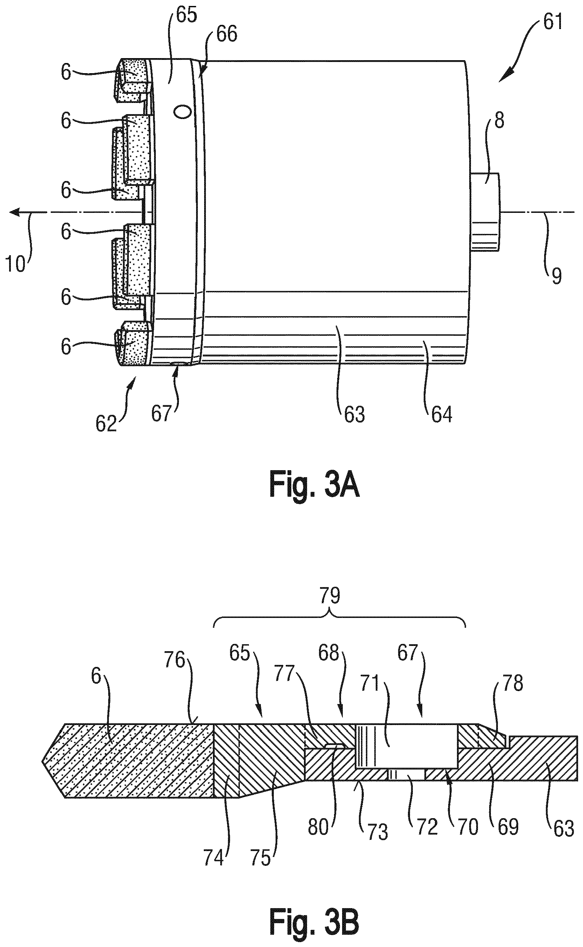

- FIGN. 3A, B: eine zweite Ausführungsform einer erfindungsgemäßen Bohrkrone mit einem austauschbaren Schneidabschnitt, der über eine Steckverbindung mit einem Bohrschaftabschnitt verbunden ist (FIG. 3A), und die Verbindung zwischen dem Schneidabschnitt und dem Bohrschaftabschnitt in einem Längsschnitt parallel zur Bohrachse (FIG. 3B).

**FIG. 1** zeigt eine erste Ausführungsform einer erfindungsgemäßen Bohrkrone **1** bestehend aus einem Schneidabschnitt **2,** einem Bohrschaftabschnitt **3** und einem Aufnahmeabschnitt **4**. Der Schneidabschnitt 2 umfasst einen zylinderförmigen Ringabschnitt **5** und mehrere Schneidsegmente **6**, die mit dem Ringabschnitt 5 verbunden sind. Die Schneidsegmente 6 sind mit dem Ringabschnitt 5 verschweißt, verlötet, verschraubt oder in einer anderen geeigneten Befestigungsart am Ringabschnitt 5 befestigt. Der Aufnahmeabschnitt 4 umfasst einen Deckel **7** und ein Einsteckende **8**, über das die Bohrkrone 1 in einer Werkzeugaufnahme einer Bohrmaschine befestigt wird. Im Bohrbetrieb wird die Bohrkrone 1 von der Bohrmaschine um eine Bohrachse **9** gedreht und bei einer handgeführten Bohrmaschine vom Anwender per Hand bzw. bei einer ständergeführten Bohrmaschine von einer Vorschubeinheit in einer Bohrrichtung **10** parallel zur Bohrachse 9 in den zu bearbeitenden Untergrund bewegt.

Der Schneidabschnitt 2 ist über eine erste Verbindung **11** mit dem Bohrschaftabschnitt 3 verbunden und der Bohrschaftabschnitt 3 ist über eine zweite Verbindung **12** mit dem Aufnahmeabschnitt 4 verbunden. Die erste und zweite Verbindung 11, 12 sind als lösbare Verbindungen ausgebildet. Eine Verbindung wird als lösbar bezeichnet, wenn die Verbindung vom Anwender zerstörungsfrei gelöst werden kann, wie beispielsweise eine Steckverbindung, eine Schraubverbindung oder eine Magnetverbindung. Eine Verbindung wird als nichtlösbar bezeichnet, wenn der Anwender die Verbindung nur durch Zerstörung der Verbindungsmittel lösen kann, wie beispielsweise eine Lötverbindung, eine Schweißverbindung, eine Nietverbindung oder eine Klebeverbindung.

Bei der in FIG. 1 gezeigten Ausführungsform sind die erste und zweite Verbindung 11, 12 als lösbare Verbindungen, die einen ersten Bohrkronenabschnitt 2, 3 mit einem zweiten Bohrkronenabschnitt 3, 4 verbinden, ausgebildet. Für die erste Verbindung 11 bildet der Schneidabschnitt 2 einen ersten Bohrkronenabschnitt und der Bohrschaftabschnitt 3 einen zweiten Bohrkronenabschnitt. Für die zweite Verbindung 12 bildet der Bohrschaftabschnitt 3 einen ersten Bohrkronenabschnitt und der Aufnahmeabschnitt 4 einen zweiten Bohrkronenabschnitt.

Der Schneidabschnitt 2 umfasst in der in FIG. 1 gezeigten Ausführung den zylinderförmigen Ringabschnitt 5, an dem mehrere Schneidsegmente 6 befestigt sind. Der Schneidabschnitt 2 kann anstatt mehrerer Schneidsegmente 6 auch ein einzelnes als Schneidhülse ausgebildetes Schneidsegment aufweisen, das mit dem Ringabschnitt 5 verbunden ist. Außerdem kann der Schneidabschnitt 2 aus mehreren Teilabschnitten bestehen, wobei jeder Teilabschnitt einen zylinderabschnittsförmigen Ringabschnitt mit mindestens einem Schneidsegment 6 aufweist und mit dem Bohrschaftabschnitt 3 verbunden wird.

**FIGN. 2A****, B** zeigen die erste Verbindung 11 der Bohrkrone 1, die den Schneidabschnitt 2 lösbar mit dem Bohrschaftabschnitt 3 verbindet, in einem Längsschnitt parallel zur Bohrachse 9, wobei FIG. 2A die Verbindung im gesteckten Zustand zeigt und FIG. 2B die Verbindungselemente in einer Explosionsdarstellung.

Die erste Verbindung 11 zwischen dem Schneidabschnitt 2 und dem Bohrschaftabschnitt 3 ist als Steckverbindung mit einem als Buchse ausgebildeten ersten Steckverbindungselement **13** und einem als Stecker ausgebildeten zweiten Steckverbindungselement **14** ausgebildet. Das erste Steckverbindungselement 13 ist am Ringabschnitt 5 des Schneidabschnittes 2 vorgesehen und monolithisch mit dem Ringabschnitt 5 ausgebildet. Das zweite Steckverbindungselement 14 ist am Bohrschaftabschnitt 3 vorgesehen und monolithisch mit dem Bohrschaftabschnitt 3 ausgebildet. Alternativ zur monolithischen Ausbildung können die Steckverbindungselemente 13, 14 als separate Teile ausgebildet und anschließend mit dem Ringabschnitt 5 bzw. mit dem Bohrschaftabschnitt 3 verbunden werden.

Der Bohrschaftabschnitt 3 wird mit dem Stecker 14 in die Buchse 13 des Schneidabschnittes 2 gesteckt. Die Buchse 13 weist eine äußere Mantelfläche **15**, eine Stirnfläche **16** und eine Anlagefläche **17** auf und der Stecker 14 eine innere Mantelfläche **18**, eine Stirnfläche **19** und eine Anlagefläche **20**. Der Stecker 14 ist länger als die Buchse 13 ausgebildet. Durch die Längendifferenz zwischen den Steckverbindungselementen 13, 14 ist sichergestellt, dass die Stirnfläche 19 des Steckers 14 an der Anlagefläche 17 der Buchse 13 anliegt.

Im gesteckten Zustand liegt der Bohrschaftabschnitt 3 mit der Stirnfläche 19 an der Anlagefläche 17 des Schneidabschnittes 2 an. Die innere Mantelfläche 15 der Buchse 13 und die äußere Mantelfläche 18 des Steckers 14 bilden eine Spielpassung. Je geringer die Differenz der Durchmesser zwischen den Mantelflächen 15, 18 ist, umso genauer ist der Schneidabschnitt 2 zur Bohrachse 9 ausgerichtet. Andererseits muss das Spiel zwischen der Buchse 13 und dem Stecker 14 so groß sein, dass der Anwender den Schneidabschnitt 2 von Hand vom Bohrschaftabschnitt 3 entfernen kann.

Das erste und zweite Steckverbindungselement 13, 14 sind in einer radialen Richtung **21** senkrecht zur Bohrachse 9 über eine als lösbare Stiftverbindung ausgebildete Sicherungseinrichtung **22** miteinander verbunden. Die Stiftverbindung 22 umfasst mehrere Aufnahmebohrungen **23** und als Stiftelemente ausgebildete Sicherungselemente **24**, die in die Aufnahmebohrungen 23 gesteckt werden. Jede Aufnahmebohrung 23 besteht aus einer Durchgangsbohrung **25**, die die Buchse 13 vollständig durchdringt, und einer Sackbohrung **26**, die den Stecker 14 teilweise durchdringt. Die Aufnahmebohrung ist im Stecker 14 als Sackbohrung 26 ausgebildet, um ein Durchrutschen des Stiftelementes 24 zur Innenseite der Bohrkrone zu verhindern.

Die erste Verbindung 11 muss den Schneidabschnitt 2 und den Bohrschaftabschnitt 3 in sämtlichen Translations- und Drehrichtungen miteinander verbinden. Der austauschbare Schneidabschnitt 2 muss gegen Translationen in Bohrrichtung 10, entgegen der Bohrrichtung 10 und radial zur Bohrrichtung 10 sowie gegen Drehungen um die Bohrachse 9 gesichert werden. Die Steckverbindung der Steckverbindungselemente 13, 14 sichert den Schneidabschnitt 2 gegen Translationen entgegen der Bohrrichtung 10 und radial zur Bohrrichtung 10. Die Stiftverbindung 22 verhindert eine Drehung um die Bohrachse 9 und eine Translation in Bohrrichtung 10. Dabei gibt es für die Stiftverbindung 22 die zusätzliche Anforderung, dass das Stiftelement 24 im Bohrbetrieb sicher in der Aufnahmebohrung 23 fixiert ist und sich nicht aus der Aufnahmebohrung 23 löst. Sollte sich das Stiftelement 24 im Bohrbetrieb aus der Aufnahmebohrung 23 lösen, ist der Schneidabschnitt 2 nicht gegen eine Translation in Bohrrichtung 10 und eine Drehung um die Bohrachse 9 gesichert.

Um die Gefahr zu reduzieren, dass sich die Stiftelemente 24 im Bohrbetrieb bei einer Drehung um die Bohrachse 9 durch die Zentrifugalkräfte lösen und aus der Aufnahmebohrung 23 herausfallen, ist eine zusätzliche Verliersicherung für die Stiftelemente 24 vorgesehen.

Bei der magnetischen Stiftverbindung bildet der Boden der Sackbohrung 26 eine magnetische Gegenfläche zum Stiftelement 24. Dabei sind das Stiftelement 24 als Dauermagnet und der Stecker 14 ferromagnetisch ausgebildet oder der Stecker 14 als Dauermagnet und das Stiftelement 24 ferromagnetisch. Die Buchse 13, die über die Stiftverbindung 22 mit dem Stecker 14 verbunden wird, kann aus einem ferromagnetischen Material oder einem sonstigen Material, wie beispielsweise Kunststoff, ausgebildet sein.

Die Durchmesser der Sicherungselemente 24 und der zugehörigen Aufnahmebohrungen 23 sind aufeinander abgestimmt. Die Aufnahmebohrungen 23 sind gleich tief oder tiefer als die Sicherungselemente 24 ausgebildet. Dadurch ist sichergestellt, dass die Sicherungselemente 24 gegenüber der Außenseite **27** der Buchse 13 nicht vorstehen. Die Sicherungselemente 24 sind als magnetische Zylinderstifte ausgebildet, wobei die Stärke der Magnetkraft an die Bearbeitungsparameter der Bohrmaschine angepasst ist. Die Aufnahmebohrung 23 ist über eine Öffnung **28** mit der Innenseite **29** des Bohrschaftabschnittes 23 verbunden. Über die Öffnung 28 ist das Sicherungselement 24 von der Innenseite 29 zugänglich und kann beispielsweise mit einem geeigneten Werkzeug aus der Aufnahmebohrung 23 gedrückt werden, so dass die Stiftverbindung leicht gelöst werden kann.

Ein Schneidabschnitt 2, bei dem die Schneidsegmente 6 abgenutzt sind, kann vom Anwender einfach und schnell gegen einen neuen Schneidabschnitt 2 ausgetauscht werden. Zum Entfernen des abgenutzten Schneidabschnittes 2 werden die Sicherungselemente 24 aus den Aufnahmebohrungen 23 entfernt und der abgenutzte Schneidabschnitt 2 wird vom Bohrschaftabschnitt 3 entnommen. Der Bohrschaftabschnitt 3 wird mit dem Stecker 14 auf die Buchse 13 des neuen Schneidabschnittes 2 gesteckt und die Stiftelemente 24 werden in die Durchgangsbohrungen 25 des neuen Schneidabschnittes 2 eingesetzt. Anschließend wird der neue Schneidabschnitt 2 um den Bohrschaftabschnitt 3 gedreht, bis die Stiftelemente 24 in die Sackbohrungen 26 des Bohrschaftabschnittes 3 einrasten. Das Einrasten der Sicherungselemente 24 in die Sackbohrungen 26 des Bohrschaftabschnittes 3 ist aufgrund der Magnetkräfte für den Anwender zu hören. Die Magnetverbindung besteht zwischen dem Stiftelement 24 und dem Boden der Sackbohrung 26.

**FIG. 3A** zeigt eine zweite Ausführungsform einer erfindungsgemäßen Bohrkrone **61** bestehend aus einem austauschbaren Schneidabschnitt **62**, einem Bohrschaftabschnitt **63** und einem Aufnahmeabschnitt **64** in einer dreidimensionalen Darstellung.

Der Schneidabschnitt 62 umfasst einen Ringabschnitt **65**, der mit mehreren Schneidsegmenten 6 verbunden ist, und ist über eine lösbare Verbindung **66** mit dem Bohrschaftabschnitt 63 verbunden. Die Verbindung 66 ist in Richtung der Bohrachse 9 als Steckverbindung aus einem ersten und zweiten Steckverbindungselement ausgebildet, wobei die Steckverbindungselemente in radialer Richtung senkrecht zur Bohrachse 9 über eine Sicherungseinrichtung **67** gegen eine Rotation um die Bohrachse 9 und gegen ein Verschieben entlang der Bohrachse 9 gesichert sind.

**FIG. 3B** zeigt die Verbindung 66 zwischen dem Schneidabschnitt 62 und dem Bohrschaftabschnitt 63 in einem Längsschnitt parallel zur Bohrachse 9. Die Verbindung 66 umfasst ein als Buchse ausgebildeten erstes, äußeres Steckverbindungselement **68**, das am Schneidabschnitt **62** vorgesehen ist, und ein als Stecker ausgebildetes zweites, inneres Steckverbindungselement **69**, das am Bohrschaftabschnitt 63 vorgesehen ist. Die Sicherheitseinrichtung 67 ist als Stiftverbindung bestehend aus mehreren Aufnahmebohrungen **70** und Stiftelementen **71**, die in die Aufnahmebohrungen 70 gesteckt werden, ausgebildet. Die Aufnahmebohrungen 70 sind über eine Öffnung **72** mit der Innenseite **73** verbunden.

Der Aufbau des Ringabschnittes 65 und des ersten, äußeren Steckverbindungselementes 68 unterscheiden sich vom Aufbau des Ringabschnittes 5 und des ersten Steckverbindungselementes 13 der Bohrkrone 1. Der Ringabschnitt 65 ist im Unterschied zum Ringabschnitt 5 der Bohrkrone 1 zweiteilig aufgebaut und besteht aus einem ersten Ringabschnitt **74** mit einem konstanten Innendurchmesser und einem zweiten Ringabschnitt **75** mit einem Innendurchmesser, der in Richtung der Schneidsegmente 6 abnimmt. Der zweite Ringabschnitt 75 dient dazu, das Entfernen des Bohrkerns zu unterstützen und wird auch als Kernentfernungsabschnitt bezeichnet. Der erste und zweite Ringabschnitt 74, 75 weisen einen konstanten Außendurchmesser auf. Der Ringabschnitt 65 ist an der Außenseite **76** bündig mit den Schneidsegmenten 6 verbunden. Dadurch, dass der Ringabschnitt 65 an der Außenseite 76 bündig an die Schneidsegmente 6 anschließt, bildet der Ringabschnitt 65 beim Bohren mit der Bohrkrone 61 eine Führung für die Schneidsegmente 6 und stabilisiert die Schneidsegmente 6.

Das als Buchse ausgebildete erste Steckverbindungselement 68 ist im Unterschied zum ersten Steckverbindungselement 13 der Bohrkrone 1 zweiteilig aufgebaut und besteht aus einem ersten Abschnitt **77** mit einem konstanten Außendurchmesser und einem zweiten Abschnitt **78** mit einem Außendurchmesser, der in Richtung des Bohrschaftabschnittes 3 abnimmt. Der Bohrschaftabschnitt 63 weist einen Außendurchmesser auf, der kleiner als der gewünschte Bohrlochdurchmesser ist. Beim Bohren mit der Bohrkrone 61 muss zwischen dem Bohrloch und dem Bohrschaftabschnitt 63 ein Spalt vorhanden sein, über den Kühl- und Spülflüssigkeit transportiert werden kann.

Der erste Abschnitt 77 der Buchse 68 weist einen Außendurchmesser auf, der dem gewünschten Bohrlochdurchmesser entspricht, so dass auch der erste Abschnitt 77 beim Bohren mit der Bohrkrone 61 eine Führung für die Schneidsegmente 6 bildet und die Schneidsegmente 6 stabilisiert. Der Ringabschnitt 65 und der erste Abschnitt 77 der Buchse 68 werden gemeinsam als Führungsabschnitt **79** bezeichnet. Der Führungsabschnitt 79 und der zweite Abschnitt 78 der Buchse 68 sind monolithisch ausgebildet. Alternativ zur monolithischen Ausbildung können die Abschnitte 74, 75, 77, 78 als separate Teile ausgebildet und verbunden werden.

Der Führungsabschnitt 79 ist Bestandteil des austauschbaren Schneidabschnittes 62 und wird bei der Bearbeitung mit der Bohrkrone 61 vom zu bohrenden Untergrund durch Reibung abgenutzt. Die Anordnung des Führungsabschnittes 79 am austauschbaren Schneidabschnitt 62 hat den Vorteil, dass der Führungsabschnitt 79 regelmäßig ersetzt wird und gute Führungseigenschaften für die Schneidsegmente 6 sichergestellt werden. Die Höhe des Führungsabschnittes 79 wird so gewählt, dass einerseits die Schneidsegmente 6 beim Bohren geführt werden und andererseits die Kühl- und Spülflüssigkeit im Bohrloch transportiert werden kann.

Um die Funktionsfähigkeit der Steckverbindung 66 zu erhalten, weist das erste Steckverbindungselement 68 eine Vertiefung **80** auf, die vor dem Zusammenbau der Bohrkrone 61 mit einem Korrosionsschutzmittel gefüllt wird. Alternativ oder zusätzlich kann im zweiten Steckverbindungselement 69 eine Vertiefung vorgesehen werden, die ein Korrosionsschutzmittel aufnimmt.

FIGN. 3A, B zeigen eine Ausführungsform einer Bohrkrone 61, bei der der Schneidabschnitt 62 einen Kernentfernungsabschnitt 75 und einen Übergangsabschnitt 78 aufweist. Die Ausbildung des Kernentfernungsabschnittes 75 an der Innenseite 73 des Schneidabschnittes 62 hat keinen Einfluss auf die Führungseigenschaften des Führungsabschnittes 79. Alternativ kann der Kernentfernungsabschnitt 75 an einer anderen Stelle des Schneidabschnittes 62 vorgesehen sein oder die Bohrkrone 61 weist keinen Kernentfernungsabschnitt auf. Ein abgeschrägter Übergangsabschnitt 78 hat den Vorteil, dass eine Bohrkrone, die sich im Bohrloch verklemmt hat, aufgrund des geringeren Widerstandes leichter aus dem Bohrloch entfernt werden kann.

Die in den FIGN. 1und 3A gezeigten Bohrkronen 1 und 61 weisen senkrecht zur Bohrachse einen kreisförmigen Querschnitt auf. Alternativ können erfindungsgemäße Bohrkronen andere geeignete Querschnitte, wie beispielsweise einen mehreckigen Querschnitt aufweisen.

## Patentansprüche

1. Bohrkrone (1; 61), die um eine Bohrachse (9) drehbar ist, aufweisend:
▪ einen Schneidabschnitt (2; 62) mit einem zylinderförmigen Ringabschnitt (5; 65), einem oder mehreren Schneidsegmenten (6; 57), die mit dem Ringabschnitt (5; 65) verbunden sind, und einem ersten Steckverbindungselement (13; 68),
▪ einen Bohrschaftabschnitt (3; 63) mit einem zweiten Steckverbindungselement (14; 69), das mit dem ersten Steckverbindungselement (13; 68) eine Steckverbindung (11; 66) bildet,
wobei das erste Steckverbindungselement (13; 68) und das zweite Steckverbindungselement (14; 69) über eine Stiftverbindung (22; 67), die als lösbare Verbindung ausgebildet ist, verbindbar sind und die Stiftverbindung (22; 67) mindestens eine Aufnahmebohrung (23; 70) und mindestens ein in die Aufnahmebohrung (23; 70) einsetzbares Stiftelement (24; 71) aufweist,
**dadurch gekennzeichnet, dass** die Stiftverbindung als magnetische Stiftverbindung (22; 67) ausgebildet ist, wobei das Stiftelement (24; 71) oder eines der Steckverbindungselemente (13, 14; 68, 69) als Dauermagnet ausgebildet ist.

2. Bohrkrone nach Anspruch 1, **dadurch gekennzeichnet, dass** das erste und zweite Steckverbindungselement (13, 68, 69) eine Steckverbindung (11; 66) mit einem äußeren Steckverbindungselement (13; 68) und einem inneren Steckverbindungselement (14; 69) bilden.

3. Bohrkrone nach einem der Ansprüche 1 bis 2, **dadurch gekennzeichnet, dass** im ersten und/oder zweiten Steckverbindungselement (68, 69) eine Vertiefung (80) vorgesehen ist, die mit einem Korrosionsschutzmittel befüllbar ist.

4. Bohrkrone nach Anspruch 1, **dadurch gekennzeichnet, dass** die mindestens eine Aufnahmebohrung (23; 70) gleich tief oder tiefer als das mindestens eine Stiftelement (24; 71) ausgebildet ist.

5. Bohrkrone nach Anspruch 4, **dadurch gekennzeichnet, dass** das Stiftelement (24; 71) lose ausgebildet ist und die Aufnahmebohrung (23; 70) eines der Steckverbindungselemente (13; 68) vollständig und das andere Steckverbindungselement (14; 69) zumindest teilweise durchdringt.

6. Bohrkrone nach Anspruch 5, **dadurch gekennzeichnet, dass** die Aufnahmebohrung (23; 70) das andere Steckverbindungselement (14; 69) nicht vollständig durchdringt.

7. Bohrkrone nach Anspruch 6, **dadurch gekennzeichnet, dass** das andere Steckverbindungselement (14; 69) eine Öffnung (28; 72) aufweist, die die Aufnahmebohrung (23; 70) mit der Innenseite (29; 73) oder der Außenseite (27; 76) des Bohrkronenabschnittes verbindet, wobei die Öffnung (28; 72) kleiner als die Aufnahmebohrung (23; 70) ist.

8. Bohrkrone nach Anspruch 7, **dadurch gekennzeichnet, dass** die Aufnahmebohrung das andere Steckverbindungselement vollständig durchdringt.

9. Bohrkrone nach Anspruch 1, **dadurch gekennzeichnet, dass** die Stiftelemente (24; 71) in den Aufnahmebohrungen (23; 70) klemmbar sind.

10. Bohrkrone nach einem der Ansprüche 1 bis 9, **dadurch gekennzeichnet, dass** zwischen den Schneidsegmenten (6) und dem Bohrschaftabschnitt (63) ein Führungsabschnitt (79) angeordnet ist, wobei der Führungsabschnitt (79) zumindest teilweise bündig an der Außenseite (76) und/oder der Innenseite (73) an die Schneidsegmente (6) anschließt.

11. Bohrkrone nach Anspruch 10, **dadurch gekennzeichnet, dass** der Führungsabschnitt (79) zumindest teilweise bündig an der Außenseite (76) an die Schneidsegmente (6) anschließt und zumindest teilweise als äußeres Steckverbindungselement (68) der Steckverbindung (66) ausgebildet ist.

12. Bohrkrone nach einem der Ansprüche 10 bis 11, **dadurch gekennzeichnet, dass** der Führungsabschnitt zumindest teilweise bündig an der Innenseite (73) an die Schneidsegmente (6) anschließt und zumindest teilweise als inneres Steckverbindungselement der Steckverbindung ausgebildet ist.

## Claims

1. Drill bit (1; 61) which is rotatable about a drilling axis (9), comprising:
• a cutting portion (2; 62) having a cylindrical ring portion (5; 65), one or more cutting segments (6; 57) which are connected to the ring portion (5; 65), and a first plug connection element (13; 68),
• a drilling shaft portion (3; 63) having a second plug connection element (14; 69) which forms a plug connection (11; 66) with the first plug connection element (13; 68), wherein the first plug connection element (13; 68) and the second plug connection element (14; 69) can be connected via a pin connection (22; 67), which takes the form of a releasable connection, and the pin connection (22; 67) has at least one receiving bore (23; 70) and at least one pin element (24; 71) which can be inserted into the receiving bore (23; 70),
**characterized in that** the pin connection takes the form of a magnetic pin connection (22; 67), wherein the pin element (24; 71) or one of the plug connection elements (13, 14; 68, 69) is designed as a permanent magnet.

2. Drill bit according to Claim 1, **characterized in that** the first and second plug connection element (13, 68, 69) form a plug connection (11; 66) with an outer plug connection element (13; 68) and an inner plug connection element (14; 69).

3. Drill bit according to one of Claims 1 to 2, **characterized in that** a depression (80), which can be filled with a corrosion protection agent, is provided in the first and/or second plug connection element (68, 69).

4. Drill bit according to Claim 1, **characterized in that** the at least one receiving bore (23; 70) is the same depth as or is deeper than the at least one pin element (24; 71).

5. Drill bit according to Claim 4, **characterized in that** the pin element (24; 71) is designed to be loose and completely passes through the receiving bore (23; 70) of one of the plug connection elements (13; 68) and at least partially passes through the other plug connection element (14; 69).

6. Drill bit according to Claim 5, **characterized in that** the receiving bore (23; 70) does not completely pass through the other plug connection element (14; 69).

7. Drill bit according to Claim 6, **characterized in that** the other plug connection element (14; 69) has an opening (28; 72) which connects the receiving bore (23; 70) to the inner side (29; 73) or the outer side (27; 76) of the drill bit portion, wherein the opening (28; 72) is smaller than the receiving bore (23; 70).

8. Drill bit according to Claim 7, **characterized in that** the receiving bore completely passes through the other plug connection element.

9. Drill bit according to Claim 1, **characterized in that** the pin elements (24; 71) can be clamped in the receiving bores (23; 70).

10. Drill bit according to one of Claims 1 to 9, **characterized in that** a guide portion (79) is arranged between the cutting segments (6) and the drilling shaft portion (63), wherein the guide portion (79) adjoins the cutting segments (6) at least partially flush with the outer side (76) and/or the inner side (73).

11. Drill bit according to Claim 10, **characterized in that** the guide portion (79) adjoins the cutting segments (6) at least partially flush with the outer side (76) and is at least partially designed as an outer plug connection element (68) of the plug connection (66).

12. Drill bit according to one of Claims 10 to 11, **characterized in that** the guide portion adjoins the cutting segments (6) at least partially flush with the inner side (73) and is at least partially designed as an inner plug connection element of the plug connection.

## Revendications

1. Couronne de forage (1 ; 61) pouvant tourner autour d'un axe de forage (9), présentant :
- une section de coupe (2 ; 62) avec une section annulaire cylindrique (5 ; 65), un ou plusieurs segments de coupe (6 ; 57) qui sont reliés à la section annulaire (5 ; 65) et un premier élément de connexion enfichable (13 ; 68),
- une section de tige de forage (3 ; 63) avec un deuxième élément de connexion enfichable (14; 69), qui forme une connexion enfichable (11 ; 68) avec le premier élément de connexion enfichable (13 ; 68) ;
le premier élément de connexion enfichable (13 ; 68) et le deuxième élément de connexion enfichable (14 ; 69) pouvant être connectés par une connexion à broche (22 ; 67), qui est réalisée sous forme de connexion amovible, et la connexion à broche (22 ; 67) présentant au moins un alésage de réception (23 ; 70) et au moins un élément formant broche (24 ; 71) insérable dans l'alésage de réception (23 ; 70),
**caractérisée en ce que** la connexion à broche est réalisée sous forme de connexion à broche magnétique (22 ; 67), l'élément formant broche (24 ; 71) ou l'un des éléments de connexion par enfichage (13, 14 ; 68, 69) étant réalisé sous forme d'aimant permanent.

2. Couronne de forage selon la revendication 1, **caractérisée en ce que** le premier et le deuxième élément de connexion enfichable (13, 68, 69) forment une connexion enfichable (11 ; 66) avec un élément de connexion enfichable extérieur (13 ; 68) et un élément de connexion enfichable intérieur (14 ; 69).

3. Couronne de forage selon l'une quelconque des revendications 1 à 2, **caractérisée en ce qu'**un renfoncement (80) qui peut être rempli d'un agent anticorrosion est prévu dans le premier et/ou le deuxième élément de connexion enfichable (68, 69).

4. Couronne de forage selon la revendication 1, **caractérisée en ce que** l'au moins un alésage de réception (23 ; 70) est réalisé à la même profondeur ou plus profondément que l'au moins un élément formant broche (24 ; 71).

5. Couronne de forage selon la revendication 4, **caractérisée en ce que** l'élément formant broche (24 ; 71) est réalisé sous forme lâche et traverse entièrement l'alésage de réception (23 ; 70) de l'un des éléments de connexion enfichable (13 ; 68) et au moins partiellement l'autre élément de connexion enfichable (14 ; 69).

6. Couronne de forage selon la revendication 5, **caractérisée en ce que** l'alésage de réception (23 ; 70) ne traverse pas entièrement l'autre élément de connexion enfichable (14 ; 69).

7. Couronne de forage selon la revendication 6, **caractérisée en ce que** l'autre élément de connexion enfichable (14 ; 69) présente une ouverture (28 ; 72) qui relie l'alésage de réception (23 ; 70) au côté intérieur (29 ; 73) ou au côté extérieur (27 ; 76) de la section de couronne de forage, l'ouverture (28 ; 72) étant plus petite que l'alésage de réception (23 ; 70).

8. Couronne de forage selon la revendication 7, **caractérisée en ce que** l'alésage de réception traverse entièrement l'autre élément de connexion enfichable.

9. Couronne de forage selon la revendication 1, **caractérisée en ce que** les éléments formant broche (24 ; 71) peuvent être serrés dans les alésages de réception (23 ; 70).

10. Couronne de forage selon l'une quelconque des revendications 1 à 9, **caractérisée en ce qu'**une section de guidage (79) est agencée entre les segments de coupe (6) et la section de tige de forage (63), la section de guidage (79) se raccordant au moins partiellement aux segments de coupe (6) en affleurement sur le côté extérieur (76) et/ou le côté intérieur (73).

11. Couronne de forage selon la revendication 10, **caractérisée en ce que** la section de guidage (79) se raccorde au moins partiellement aux segments de coupe (6) en affleurement sur le côté extérieur (76) et est réalisée au moins partiellement en tant qu'élément de connexion enfichable extérieur (68) de la connexion enfichable (66).

12. Couronne de forage selon l'une quelconque des revendications 10 à 11, **caractérisée en ce que** la section de guidage se raccorde au moins partiellement aux segments de coupe (6) en affleurement sur le côté intérieur (73) et est réalisée au moins partiellement en tant qu'élément de connexion enfichable intérieur de la connexion enfichable.
